# EUROPEAN PATENT APPLICATION

(11) **EP 1 939 965 A1**
(43) Date of publication of application: **02.07.2008**
(21) Application number: 07025027.9
(22) Date of filing: 21.12.2007
(51) Int. Cl.: H01M 8/04, H01M 8/06, H01M 8/12

(54) **Solid oxide fuel cell power generator**

(30) Priority: 26.12.2006 JP 2006349674
(71) Applicant: SHINKO ELECTRIC INDUSTRIES CO., LTD., Nagano-shi, Nagano 381-2287 (JP)
(72) Inventor: Katagiri, Fumimasa, Nagano-shi Nagano 381-2287 (JP); Yoshiike, Jun, Nagano-shi Nagano 381-2287 (JP); Suganuma, Shigeaki, Nagano-shi Nagano 381-2287 (JP); Tokutake, Yasue, Nagano-shi Nagano 381-2287 (JP)
(74) Representative: Zimmermann, Gerd Heinrich

(57) **Abstract**

A solid oxide fuel cell power generator 10 according to the invention includes a plate-shaped solid oxide fuel cell C having a solid electrolytic substrate 1 on which a cathode electrode layer 2 and an anode electrode layer 3 are formed and a combustion portion 11 for supplying a flat flame F to the anode electrode layer 3, and the combustion portion 11 has a combustion burner surface 12 disposed in almost parallel with the anode electrode layer 3 apart therefrom by a predetermined distance, the flat flame F is generated by a combustion of a premixed fuel supplied to the combustion burner surface 12, and the combustion burner surface 12 has a plurality of fuel injection holes 16 formed in an opposed region P to the anode electrode layer 3.

## Description

### BACKGROUND OF THE INVENTION

### 1. Field of the Invention

The present invention relates to a solid oxide fuel cell power generator, and more particularly to a solid oxide fuel cell power generator having a structure in which there is provided a direct flame type solid oxide fuel cell including a solid electrolytic substrate having a cathode electrode layer and an anode electrode layer formed thereon and utilizing a flat flame as a fuel and a closure is not required.

### 2.Description of the Related Art

In recent years, various fuel cells of a power generating type have been developed, including a solid oxide fuel cell where a solid electrolyte is employed. As an example of the solid oxide fuel cell, an annealed product constituted by stabilized zirconia having yttria (Y₂O₃) added thereto is used as a solid electrolytic layer of an oxygen ion conducting type. A cathode electrode layer is formed on one of surfaces of the solid electrolytic layer while an anode electrode layer is formed on an opposite surface thereto, and oxygen or an oxygen containing gas is supplied to the cathode electrode layer side, and furthermore, a fuel gas such as methane is supplied to the anode electrode layer.

In the solid oxide fuel cell, oxygen (O₂) supplied to the cathode electrode layer is changed into an oxygen ion (O²⁻) at a boundary between the cathode electrode layer and the solid electrolytic layer, and said oxygen ion is conducted to the anode electrode layer through the solid electrolytic layer. Further, said oxygen ion reacts to a fuel gas, such as methane (CH₄) gas, which is supplied to the anode electrode layer, resulting in that water (H₂O), carbon dioxide (CO₂), hydrogen (H₂) and carbon monoxide (CO) are generated. In the reaction, the oxygen ion discharges an electron. Therefore, an electric potential difference is made between the cathode electrode layer and the anode electrode layer. If a lead wire is connected between the cathode electrode layer and the anode electrode layer, the electron in the anode electrode layer flows into the cathode electrode layer through the lead wire, by which electric power is generated as the solid oxide fuel cell. A driving temperature of the solid oxide fuel cell is approximately 1000°C.

The power generator using the solid oxide fuel cell of this type, however, requires different separate chambers, namely an oxygen or oxygen containing gas supplying chamber, and a fuel gas supplying chamber, which are respectively provided on the cathode electrode layer side and the anode electrode layer side separately from each other. In addition, it is inevitable for those chambers to be exposed to an oxidizing atmosphere and a reducing atmosphere at a high temperature. For these reasons, it is said that such a power generator is difficult to improve its durability of the solid oxide fuel cell.

On the other hand, a solid oxide fuel cell having the following type has been developed. That is, a cathode electrode layer and an anode electrode layer are provided on opposite surfaces of a solid electrolytic layer in the solid oxide fuel cell, and the solid oxide fuel cell is put in a fuel gas, for example, a mixed fuel gas mixing a methane gas and an oxygen gas to generate an electromotive force between the cathode electrode layer and the anode electrode layer. In the solid oxide fuel cell of this type, the principle mechanism for generating the electromotive force between the cathode electrode layer and the anode electrode layer is the same as that of the solid oxide fuel cell of the separating type chamber as already explained above. However, since the whole solid oxide fuel cell canbe set into a substantially identical atmosphere, it is possible to obtain a single type chamber in which the mixed fuel gas is supplied. Thus, this type of the fuel cell makes it possible to enhance the durability of the solid oxide fuel cell.

However, as for the power generator using the solid oxide fuel cell of the single type chamber, its driving operation is eventually required to be carried out at a high temperature of approximately 1000°C. For this reason, there is a risk of an explosion of the mixed fuel gas. In order to avoid such a risk, an oxygen concentration shall be set to be lower than the boundary condition of its explosion. However, in this case, there is a problem in that a fuel, such as methane, is more likely to be carbonized so that a cell performance is deteriorated. Therefore, there has been further proposed a power generator using a solid oxide fuel cell having a single type chamber which can use a mixed fuel gas in an oxygen concentration capable of suppressing the progressive carbonization of the fuel and preventing the explosion of the mixed fuel gas simultaneously as disclosed in JP A 2003-92124 Publication.

In the power generator using the solid oxide fuel cell having the single type chamber, it is not necessary to strictly separate a fuel and air from each other as in a conventional power generator usingasolidoxidefuelcell, however, ahermeticsealingstructure must be employed. A plurality of plate-shaped solid oxide fuel cells are stacked and connected by using an interconnecting material having a heat resistance and a high electric conductivity to increase an electromotive force in such a manner that a driving operation can be carried out at a high temperature. For this reason, the solid oxide fuel cell power generator having the single type chamber using the plate-shaped solid oxide fuel cell becomes a large-scaled structure, which ends up being a problem of increased cost. Moreover, as for an operation of the solid oxide fuel cell power generator having the single type chamber, a temperature is controlled to gradually rise from a need of preventing a crack of the solid oxide fuel cell. In this regard, the start timing of an electromotive operation is prolonged, which might be practically inefficient.

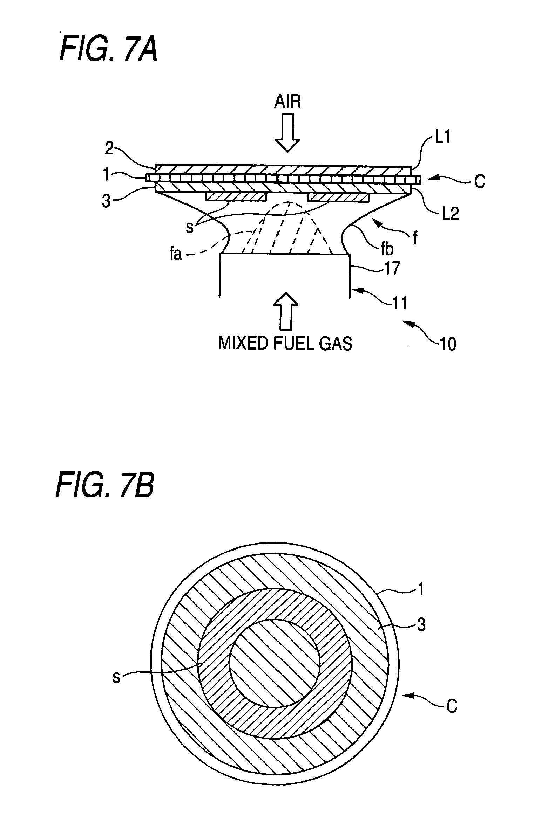

Therefore, there has been proposed an open type solid oxide fuel cell power generator in which a solid oxide fuel cell does not need to be accommodated in a container having a sealing structure, for example, as disclosed in JP-A-2004-139936 Publication. For a solid electrolytic fuel cell power generator described in said reference, there has been disclosed a configuration in which a flame f is directly utilized for supplying a fuel to a solid oxide fuel cell C as shown in Fig. 7A. Since a solid oxide fuel cell power generator 10 can shorten an electromotive time and has a simple structure, therefore, a size, a weight and a cost of the solid oxide fuel cell power generator can be advantageously reduced. Because of the direct utilization of the flame, it is possible to carry out an incorporation into a general combustion apparatus or cooling apparatus. Consequently, it has been expected that the solid oxide fuel cell power generator is utilized as a power supply apparatus.

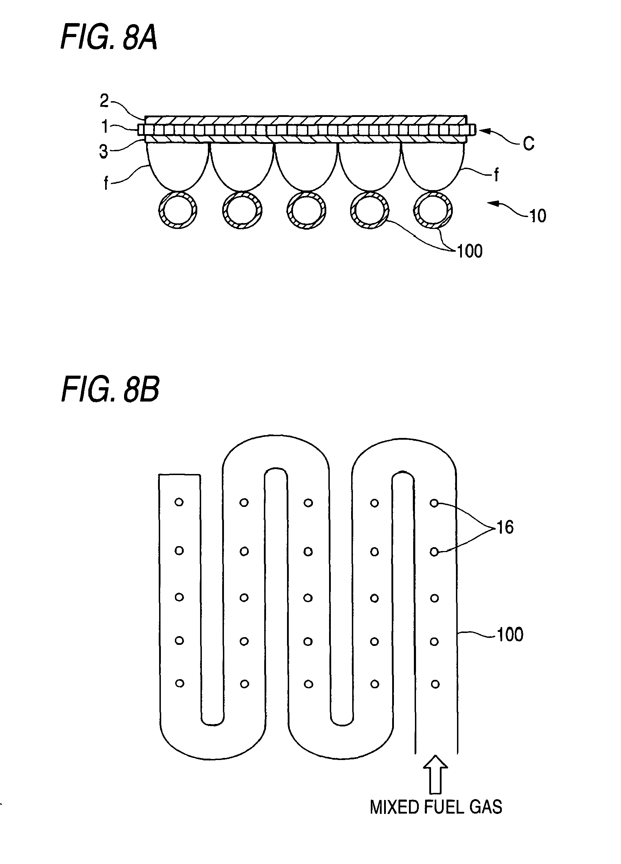

Moreover, JP A 2005-63686 has disclosed a solid oxide fuel cell power generator 10 in which a fuel supply tube 100 provided with a plurality of fuel injection holes 16 for discharging a fuel for a combustion is disposed in such a manner that a plurality of flames f generated by the combustion is uniformly radiated to a whole surface of an anode electrode layer 3 of a solid oxide fuel cell C formed like plate as shown in Figs. 8A and 8B so that an electrical efficiency of the solid oxide fuel cell C can be enhanced.

In the solid oxide fuel cell power generators 10 shown in Figs. 7A and 8A, the solid oxide fuel cell C has a plate-shaped solid electrolytic substrate 1, and a plate-shaped cathode electrode layer 2 is formed on one of surfaces of the substrate and a plate-shaped anode electrode layer 3 is formed on the other surface. The anode electrode layer 3 is directly exposed to the flame f. Therefore, a power generating output performance or durability of the power generator is greatly influenced by a shape of the flame f.

For example, in the case in which a so-called Bunsen burner is used as a combustion portion 11 as in the apparatus described in the Patent document 2, the flame f is constituted by a reducing flame fa positioned on an inside of the flame f and a diffusion flame fb positioned on an outside thereof. Therefore, the anode electrode layer 3 exposed to the flame f has a low inner temperature and a high outer temperature whose profile might be shown as a temperature gradient pattern having concentric circles in a planar direction thereof. For this reason, a thermal stress is generated to cause a crack in the solid oxide fuel cell C, resulting in a deterioration in a durability of the solid oxide fuel cell C.

When carbon hydride is used as a fuel in the Bunsen burner, a circular soot S is formed in an inner part of the anode electrode layer 3 due to the temperature gradient under an oxygen deficiency as shown in Figs. 7A and 7B. The performance of the anode electrode layer 3 is deteriorated due to the soot S. For this reason, the durability of the solid oxide fuel cell C is also deteriorated. The generation of the soot S hinders the effective utilization of the carbon hydride to be a fuel and causes a decrease in a thermal energy. Consequently, an electrical efficiency of the solid oxide fuel cell C is lowered.

Referring to the power generator 10 described in the Patent Document 3, moreover, air flows through a portion between the fuel supply tubes 100, which makes a burning state becomes unstable . This is because as the fuel supply tube 100 has a predetermined dimension with a multiple hairpin turn portions switching back by themselves, the fuel injection hole 16 cannot be formed at a high density in such a hairpin turn portion. Furthermore, due to a pressure loss caused in the elongated fuel supply tube 100 being used, an amount of the injected fuel from the injected hole 16 is varied depending on a position of the fuel supply tube 100, which turns out that a scale of the flame f becomes nonuniform. Moreover, a high manufacturing cost is required for forming a plurality of fuel injection holes 16 in such a manner that a plurality of flames f is uniformly radiated to the anode electrode layer 3. In this regard, this is not suitable for a structure employed for a small size power generator.

### SUMMARY OF THE INVENTION

Accordingly, it is an object of the invention to provide a solid oxide fuel cell power generator which can eliminate the drawbacks of the prior arts. In particular, it is an object of the invention to provide a solid oxide fuel cell power generator of an open type which supplies a flat flame as a fuel of the solid oxide fuel cell, is excellent in an electrical efficiency and a durability, takes a low manufacturing cost and directly utilizes a flame.

In order to solve the problems, the invention provides a solid oxide fuel cell power generator comprising a solid oxide fuel cell having a solid electrolytic substrate on which a cathode electrode layer and an anode electrode layer are formed, and a combustion portion for supplying a flat flame to the anode electrode layer, wherein said flat flame is radiated uniformly over a flat surface of the anode electrode.

The combustion portion has a combustion burner surface disposed in almost parallel with the anode electrode layer apart therefrom by a predetermined distance, the flat flame is generated by combusting a premixed fuel supplied to the combustion burner surface, and the combustion burner surface has a plurality of fuel injection holes formed in an opposed region to the anode electrode layer.

Moreover, the fuel injection holes are uniformly formed over the combustion burner surface.

Furthermore, the fuel injection holes are formed to have a rotational symmetrical property of a three-time rotational symmetry or more with a central point of the combustion burner surface set to be an axis thereof.

In addition, an equivalence ratio of a fuel component to an oxidant component in the premixed fuel is regulated to be 1.0 to 1.5.

Moreover, each of the fuel injection holes takes a circular shape having a diameter which is equal to or greater than 0.5 mm and is smaller than 2.0 mm, and furthermore, an opening area of all of opening portions of the fuel injection holes is equal to or larger than 15% and is smaller than 40% of an area of the region of the combustion burner surface which is opposed to the anode electrode layer.

In addition, the premixed fuel is obtained by previously mixing a gaseous fuel and oxygen or a gas containing the oxygen.

As described above, according to the solid oxide fuel cell power generator in accordance with the invention, an electrical efficiency and a durability are excellent and a manufacturing cost can be reduced.

### BRIEF DESCRIPTION OF THE DRAWINGS

Fig. 1 is a typical view showing an embodiment of a solid oxide fuel cell power generator according to the invention,
Fig. 2 is a top view showing a solid oxide fuel cell in Fig. 1,
Fig. 3 is a plan view showing a combustion burner surface in Fig. 1,
Fig. 4A is a top view showing a variant of the combustion burner surface in Fig. 3 and Fig. 4B is a top view showing another variant,
Fig. 5 is a chart showing power generating output characteristics according to a specific example and a comparative example,
Fig. 6 is a chart showing durabilities of the power generating output characteristics according to the specific example and the comparative example,
Fig. 7A is a typical view showing a solid oxide fuel cell power generator according to the prior art and Fig. 7B is a view showing a soot generated on an anode electrode layer of a solid oxide fuel cell, and
Fig. 8A is a typical view showing another solid oxide fuel cell power generator according to the related art and Fig. 8B is a plan view showing a fuel supply tube in Fig. 8A.

### DESCRIPTION OF THE PREFERRED EMBODIMENTS

Embodiments of the present invention will be described hereinbelow by reference to the drawings. Unless otherwise specifically defined in the specification, terms have their ordinary meaning as would be understood by those of ordinary skill in the art.

A preferred embodiment of a solid oxide fuel cell power generator according to the invention will be described below with reference to the drawings. In the embodiment, a flat flame is employed in order to obtain a uniform temperature distribution of the solid oxide fuel cell and to enhance a durability and an electrical efficiency of the solid oxide fuel cell power generator.

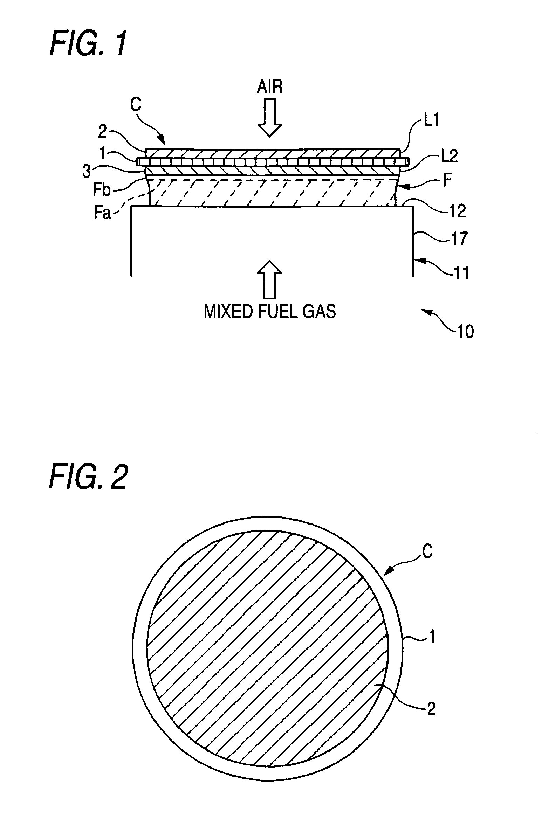

A solid oxide fuel cell power generator 10 according to the embodiment (which will be hereinafter referred to as an apparatus 10) comprises a plate-shaped solid oxide fuel cell C having a solid electrolytic substrate 1 having a cathode electrode layer 2 and an anode electrode layer 3 formed thereon and a combustion burner body 11 to be a combustion portion for supplying a flat flame F to the anode electrode layer 3 as shown in Figs. 1 to 3.

The apparatus 10 is an open type solid oxide fuel cell power generator which utilizes a so-called direct flame, that is, directly exposes the anode electrode layer 3 to the flat flame f to generate a power.

A power generated in the solid oxide fuel cell C is taken out by lead wires L1 and L2 led from the anode electrode layer 3 and the cathode electrode layer 2, respectively. The lead wire to be used is formed of platinum having a heat resistance or an alloy containing the platinum.

In the apparatus 10, the plate-shaped solid oxide fuel cell C is exposed to the flat flame F. Therefore, the flame can be uniformly radiated to the anode electrode layer 3. Furthermore, the anode electrode layer 3 is disposed toward the flame side. Therefore, carbon hydride, hydrogen or a radical (OH, CH, C₂, O₂H, CH₃) which is present in the flame can easily be utilized as a fuel.

In the embodiment, the flat flame implies a flame configuration having a plane-shaped spread. The plane shape includes a strictly two-dimensional shape, and furthermore, includes a shape having a three-dimensional spread, for example, a concavo-convex shape in some cases, and implies a shape of a flame having a small in-plane temperature distribution of a plate-shaped fuel cell which is exposed to the flat flame. More specifically, it is preferable that the in-plane temperature distribution of the fuel cell having the anode electrode layer exposed to the flat flame should have a variation in a temperature with respect to an average in-plane temperature which is equal to or lower than ±35°C, and is particularly equal to or lower than ±20°C. In the embodiment, the flame will be referred to as a flat flame, and a shape of the flame will be hereinafter referred to as a planar shape.

Next, the solid oxide fuel cell C to be used in the apparatus 10 will further be described. Fig. 1 is a typical view showing the apparatus 10 and Fig. 2 is a top view showing the solid oxide fuel cell C to be used in the apparatus 10.

As shown in Figs. 1 and 2, the solid oxide fuel cell C has the plate-shaped solid electrolytic substrate 1, and has the cathode electrode layer 2 formed like a plate on one of surfaces of the substrate and the anode electrode layer 3 formed like a plate on the other surface thereof. The solid oxide fuel cell C is wholly plate-shaped.

Although the solid oxide fuel cell C can take an optional shape, which is projected on a plane, and this is depending on their uses, a circular shape and the solid electrolytic substrate 1, in this embodiment, the apparatus 10 employs a cathode electrode layer 2 and the anode electrode layer 3 having circular shapes respectively as shown in Fig. 2. The cathode electrode layer 2 and the anode electrode layer 3 have substantially equal dimensions but each being formed to be slightly smaller than the solid electrolytic substrate 1.

Moreover, it is preferable that the dimension of the solid oxide fuel cell C should be properly designed corresponding to the requirements in a power generator to be made.

Next, the combustion burner body 11 provided in the apparatus 10 will further be described below.

The combustion burner body 11 has a combustion burner surface 12 disposed in almost parallel with the anode electrode layer 3 apart therefrom by a predetermined distance as shown in Fig. 1. The combustion burner surface 12 is formed on an end face of the combustion burner body 11.

The flat flame F is generated over the combustion burner surface 12 by the combustion of a premixed fuel supplied to the combustion burner surface 12. In the apparatus 10, the premixed fuel is a mixed fuel gas obtained by premixing a gaseous fuel and oxygen or a gas containing the oxygen. The mixed fuel gas is supplied to a combustion burner head 17 by a mixed fuel gas supply apparatus which is not shown. It is possible to use a well-known mixed fuel gas supply apparatus.

It is preferable that the combustion burner head 17 and the mixed fuel gas supply apparatus should be coupled to each other through a pipe (not shown) which shall be formed of a heat insulating material in order to prevent an ignition occurring from the overheating of the mixed fuel gas in the pipe that is located upstream from the combustion burner head 17.
Alternatively, cooling means may be provided in a pipe extended from the mixed fuel gas supply apparatus toward the combustion burner head 17 in such a manner that a heat generated by the combustion in the combustion burner head 17 is not transferred to an upstream portion from the combustion burner head 17.

Moreover, the apparatus 10 comprises holding means (not shown) for holding and fixing the solid oxide fuel cell C. In the solid oxide fuel cell C, a center of the anode electrode layer 3 is caused to be almost coincident with that of the combustion burner surface 12 by the holding means so that the anode electrode layer 3 is held in an almost parallel state with respect to the combustion burner surface 12.

Next, the combustion burner surface 12 will further be described below.

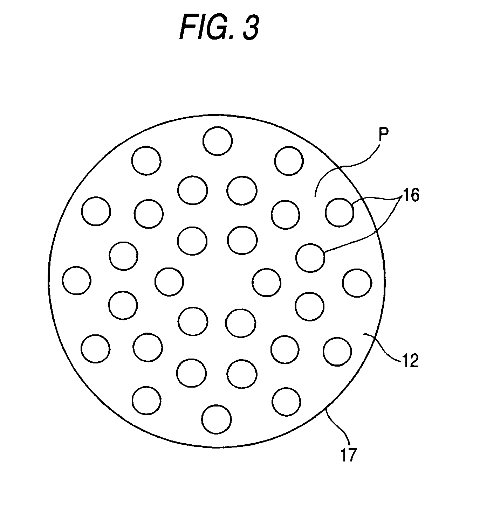

As shown in Fig. 3, the combustion burner surface 12 of the apparatus 10 has a plurality of fuel injection holes 16 formed in a region P opposed to the anode electrode layer 3. It is preferable that the region P should have the same shape as the anode electrode layer 3. In the apparatus 10, the anode electrode layer 3 takes a circular shape. Correspondingly, the region P also has a circular shape.

Accordingly, the shape of the flat flame F generated over the combustion burner surface 12 as seen on a plane also takes the same shape as the anode electrode layer 3 so that an electrical efficiency is enhanced.

It is preferable that a tube taking a circular sectional shape should be used to manufacture the combustion burner head in respect of a manufacturing cost and a processability. In the apparatus 10, the tube is used to manufacture the combustion burner head 17, and the combustion burner surface 12 to be the end face of the combustion burner head 17 also takes a circular shape.

In the apparatus 10, a central point of the circular region P is coincident with that of the combustion burner surface 12.

It is preferable that the fuel injection holes 16 should be uniformly distributed and formed on the combustion burner surface 12 in order to generate a flat flame. In the embodiment, the meaning of an uniform distribution of the fuel injection holes 16 over the combustion burner surface 12 includes the case in which the respective fuel injection holes 16 are formed at an equal interval over the combustion burner surface 12, but also, the case in which the respective fuel injection holes 16 are formed in such a manner that flames generated by a combustion of the fuels injected from the adjacent fuel injection holes 16 overlap with each other, resulting in that the flat flame can be formed.

In the apparatus 10, 30 fuel injection holes 16 are uniformly formed over the combustion burner surface 12 as shown in Fig. 3.

The individual flames generated by the fuel injection holes 16 thus formed overlap with the flames generated by the adjacent fuel injection holes 16 so that a continuous flat flame is formed. Accordingly, it is preferable that the interval between the fuel injection holes 16 formed over the combustion burner surface 12 should have a length in which the flames generated by the adjacent fuel injection holes 16 overlap with each other in order to form the flat flame. It is preferable that the interval should be properly regulated and designed depending on a flow rate of the mixed fuel gas and an opening area of the fuel injection hole 16.

Moreover, in order to form a stable and flat flame, it is preferable to form the fuel injection holes 16 such as to have a rotational symmetric property of a three-time rotational symmetry or more, and have their rotational axes set to be the central point of the combustion burner surface 12. The fuel injection holes 16 formed over the combustion burner surface 12 shown in Fig. 3 have the three-time rotational symmetry.

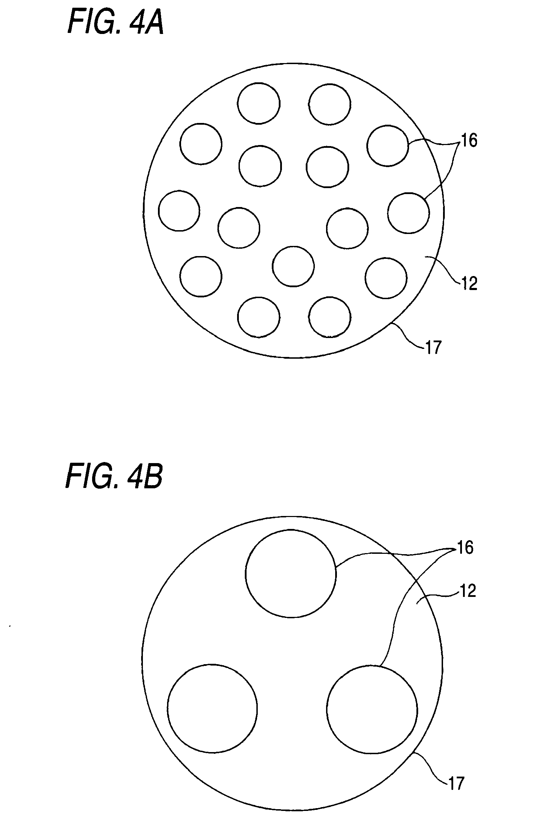

Figs. 4A and 4B show a variant of the combustion burner surface 12 shown in Fig. 3. In the variant shown in Fig. 4A, 15 fuel injection holes 16 are formed to have a five-time rotational symmetrical property. In the variant shown in Fig. 4B, moreover, three fuel injection holes 16 are formed to have a three-time rotational symmetrical property.

It is noted that the fuel injection hole 16 should not be provided on the center of the combustion burner surface 12 in order to keep the uniform temperature distribution over the solid oxide fuel cell C. This is because small amount of heat tends to escape outward from the center of the combustion burner surface 12, while the heat is transferred inward from the surroundings. Therefore, as compared with an external portion of the combustion burner surface 12, the temperature is more likely to become higher. Therefore, the fuel injection hole 16 should not be provided on the center of the combustion burner surface 12 to suppress the rise of the temperature.

In the combustion burner surface 12 shown in Fig. 3, an interval between the fuel injection holes 16 in a circumferential direction is larger in an outer part than an inner part. The reason is as follows. Air around the combustion burner head 17 is involved in the flame so that the temperature of the flame in the outer part of the combustion burner surface 12 is raised to be higher than that in the inner part. Correspondingly, the interval between the fuel injection holes 16 in the outer part of the combustion burner surface 12 is set to be larger than that in the inner part in such a manner that the temperature distribution in the plane heated by the flat flame of the anode electrode layer 3 becomes uniform.

In the combustion portion according to the conventional example, as shown in Figs. 8A and 8B, the air flows through the meandering fuel supply tube 100 so that the combustion state becomes unstable. In the combustion burner surface 12 of the apparatus 10, an opening portion is not provided between the fuel injection holes 16 so that the combustion state canbe prevented from becoming unstable by the flowing air.

As described above, the combustion burner head 17 of the apparatus 10 has such a structure as to include the combustion burner surface 12 having the fuel injection holes 16 and can be manufactured easily.

It is also possible to use a metallic porous body such as a sintered metal for the combustion burner head 17. The metal porous body has opening portions to be uniform pores on a surface thereof, and a mixed fuel gas can be uniformly injected from the combustion burner surface to generate a flat flame. However, the manufacturing cost of the combustion burner head using the metallic porous body is high. Therefore, it is preferable to use the combustion burner head 17 according to the embodiment in order to reduce the manufacturing cost.

In the apparatus 10, moreover, it is preferable that the fuel injection hole 16 should have the following dimensions in order to generate the flat flame F by the combustion burner body 11.

It is preferable that each of the fuel injection holes 16 should take a shape of a circle having a diameter which is equal to or greater than 0.5 mm and is smaller than 2.0 mm, and particularly a shape of a circle having a diameter which is equal to or greater than 0. 7 mm and is smaller than 1. 2 mm. Since the fuel injection hole 16 has a diameter which is equal to or greater than 0.5 mm, it is possible to sufficiently carry out the supply of the fuel to the anode electrode layer 3 and the heating of the solid oxide fuel cell C, and furthermore, to obtain an excellent processability. On the other hand, when the diameter of the fuel injection hole 16 is equal to or greater than 2.0 mm, a phenomenon in which the mixed fuel gas is ignited in the pipe, that is, a so-called back fire is caused so that a stable flat flame cannot be generated.

An opening area for all of the openings of the fuel injection holes 16 is equal to or larger than 15% and is smaller than 40% of an area of the region P of the combustion burner surface 12 opposed to the anode electrode layer 3. The opening area is equal to or larger than 15% of the area of the region P. Therefore, it is possible to sufficiently carry out the supply of the fuel to the anode electrode layer 3 and the heating of the solid oxide fuel cell C. On the other hand, if the opening area is equal to or larger than 40% of the area of the region P, the stable and flat flame cannot be generated.

It is possible to properly design the number and arrangement of the fuel injection holes 16 within the range. In the case in which the opening area is constant, particularly, the in-plane temperature distribution of the solid oxide fuel cell C can be made more uniform if the number of the fuel injection holes 16 is larger.

The structure of the apparatus 10 has been described above. Descriptionwill be given to materials for formingmain components in the apparatus 10.

It is preferable that materials for forming the combustion burner head 17 and the combustion burner surface 12 should have a durability in a temperature and an atmosphere which are obtained by a combustion in a power generation. The forming materials include a metal such as brass, quartz and ceramics, for example.

Next, a material for forming the solid oxide fuel cell C will be described below.

A well-known substrate can be employed for the solid electrolytic substrate 1, for example, and the following materials can be used:
a) YSZ (yttria-stabilized zirconia), ScSZ (scandia-stabilized zirconia), and zirconia based ceramics obtained by doping them with Ce or A1;
b) Ceria based ceramics such as SDC (samaria doped ceria) or SGC (gadolia doped ceria); and
c) LSGM type (lanthanum gallate based ceramics), bismuth oxide based ceramics.

In this specification, thus, the solid oxide includes a solid electrolyte.

Moreover, the anode electrode layer 3 is formed by a porous body and a well-known material can be employed for a forming material thereof, for example, and the following materials can be used:
d) cermet of nickel or cobalt andyttria-stabilized zirconia based, scandia-stabilized zirconia based or ceria based (SDC, GDC or YDC) ceramic;
e) a sintered body containing conductive oxide as a main component (50% by mass or more and 99% by mass or less). The conductive oxide is nickel oxide in which lithium is dissolved, for example; and
f) a substance obtained by blending the substances in the d) and e) with a metal constituted by a platinum group element or rhenium or oxide thereof in approximately 1 to 10% by mass.

In particular, the materials in the d) and e) are preferable.

The nickel-cobalt cermet in the d) has an excellent oxidation resistance and has a high resistance to sulfur poisoning. Therefore, it is possible to prevent a phenomenon such as a deterioration in an anode electrode function. Furthermore, it is possible to obtain a high power generating performance by blending the metal formed of the platinum based element or the rhenium or the oxide thereof with the materials in the d) and e).

The cathode electrode layer 2 is formed by a porous body and a well-known material can be employed for the forming material. For example, it is possible to employ a cobalt acid compound to which the third group element in a periodic table, for example, lanthanum or samarium having strontium added thereto is added (for example, samarium strontium cobaltite, lanthanum strontium cobaltite), a manganese acid compound of lanthanum, and a gallium acid compound (for example, lanthanum strontium manganate) or ferrite based compounds (for example, lanthanum strontium cobalt ferrite). By adding a carbon based pore-forming material to a cathode if necessary, furthermore, it is possible to obtain a high power generating characteristic.

Both the anode electrode layer 3 and the cathode electrode layer 2 are formed by porous bodies, and the solid electrolytic substrate 1 in the apparatus 10 may be formed to be porous. Conventionally, a solid electrolytic layer constituting a substrate is formed to be dense. However, a thermal shock resistance is low and a crack is easily generated by a rapid change in a temperature. In general, the solid electrolytic layer is formed more thickly than the anode electrode layer and the cathode electrode layer. Therefore, the crack is generated over the whole solid oxide fuel cell to be broken into pieces due to the crack of the solid electrolytic layer.

Also in the apparatus 10, the individual solid oxide substrates are formed to be porous. Therefore, the crack can further be suppressed and the thermal shock resistance can be enhanced more greatly even if they are disposed in a flame or in the vicinity of the flame in the power generation and a change in a temperature is rapidly given, and furthermore, in a heat cycle having a considerable temperature difference. Also in the case in which the solid oxide substrate is porous, a remarkable enhancement in the thermal shock resistance is not observed when a porosity is lower than 10%. If the porosity is equal to or higher than 10%, however, an excellent thermal shock resistance is observed. A porosity of 20% or higher is more suitable.

The solid oxide fuel cell C is manufactured in the following manner, for example. First of all, material powder of the solid electrolytic layer is mixed in a predetermined blending ratio and is formed to be a plate. Then, the plate is annealed and sintered so that a substrate to be a solid electrolytic layer is fabricated. At this time, it is possible to form solid electrolytic layers having various porosities by regulating burning conditions, for example, a type of material powder such as a pore forming agent, a blending ratio, a burning temperature, a burning time and preburning. By applying a paste acting as a cathode electrode layer to one of surface sides of a substrate to be the solid electrolytic layer thus obtained and applying a paste acting as an anode electrode layer to the other surface side to carry out the burning, it is possible to manufacture a fuel cell.

Moreover, the solid oxide fuel cell C can have a durability enhanced more greatly as will be described below. As a technique for enhancing the durability, a mesh-like metal is buried or fixed into the cathode electrode layer 2 and the anode electrode layer 3 in the plate-shaped solid oxide fuel cell C shown in Fig. 1. As a burying method, a material (paste) for each layer is applied to the solid electrolytic layer and the mesh-like metal is buried in the applied material to carry out the burning. As a fixing method, the mesh-like metal is not perfectly buried in the material of each layer but may be bonded to carry out the burning.

For the mesh-like metal, it is suitable to use a metal which is excellent in a harmony of coefficients of thermal expansion of the cathode electrode layer and the anode electrode layer into which the mesh-like metal is to be buried or fixed and a heat resistance. More specifically, examples of the mesh-like metal include a metal which is formed of platinum or an alloy containing the platinum and is meshed. Stainless of an SUS 300 level (304, 316) or an SUS 400 level (430) may be used and is advantageous to a cost.

Moreover, a wire-shaped metal may be buried or fixed into the cathode electrode layer and the anode electrode layer in place of the use of the mesh-like metal. The wire-shaped metal is formed by the same metal as the mesh-like metal and the number and arrangement shape thereof is not restricted.

The mesh-like metal or the wire-shaped metal is buried or fixed into the cathode electrode layer and the anode electrode layer so that the solid electrolytic substrate having a crack by a thermal history can be reinforced so as not to be broken intopieces. Furthermore, the mesh-like metal and the wire-shaped metal can electrically connect the portions having cracks.

While the description has been given to the case in which the solid electrolytic substrate is porous, a dense structure can be used for the solid electrolytic substrate of the solid oxide fuel cell according to the embodiment. In this case, particularly, the mesh-like metal or the wire-shaped metal is buried or embedded in the cathode electrode layer and the anode electrode layer as effective means for coping with the crack generated by the thermal history.

The mesh-like metal or the wire-shaped metal may be provided in both the cathode electrode layer and the anode electrode layer or one of them. Moreover, the mesh-like metal and the wire-shaped metal may be provided in combination. When the crack is generated by the thermal history, it is possible to continuously carry out a power generation without deteriorating a power generating capability if the mesh-like metal or the wire-shaped metal is buried in at least the anode electrode layer. The power generating capability of the fuel cell greatly depends on an effective area as a fuel electrode of the anode electrode layer. For this reason, it is preferable that the mesh-like metal or the wire-shaped metal should be provided in at least the anode electrode layer.

The apparatus 10 can generate a power in the following manner, for example.

First of all, the flat flame F ignited and generated by the combustion apparatus 11 is constituted by a reducing flame Fa and a diffusion flame Fb. The reducing flame Fa takes almost the same planar shape as shown in Fig. 1 before and after the anode electrode layer 3 is disposed in the diffusion flame Fb.

It is preferable that the anode electrode layer 3 should be disposed just above the reducing flame Fa in the flat flame F as shown in Fig. 1 in order to supply the fuel to the anode electrode layer 3 and to efficiently heat the solid oxide fuel cell C. On the other hand, in some cases in which the anode electrode layer 3 is disposed in the reducing flame Fa, the flat flame F goes out.

A length measured in a perpendicular direction to the combustion burner surface 12 between the anode electrode layer 3 and the combustion burner surface 12 is usually equal to or smaller than 10 mm.

It is preferable that an equivalence ratio of a fuel component to an oxidant component in the premixed fuel should be regulated to be 1.0 to 1.5 in order to obtain a stable and flat flame. A well-known ordinary method is used for the other processes in the power generating method.

In the power generation of the apparatus 10, mixed fuel gases injected from the fuel injection holes 16 are annealed to form individual flames, and the flames overlap with the adj acent flames so that the flat flame F is generated as shown in Fig. 1. The whole surface of the anode electrode layer 3 is disposed just above the reducing flame Fa and is thus f to the flat flame F.

In order to enhance an electrical efficiency, moreover, it is preferable that the ratio of the fuel component to the oxidant component in the mixed fuel gas should be set stoichiometrically as described above. Moreover, it is preferable to properly regulate a flow rate of the mixed fuel gas corresponding to the dimension and number of the fuel injection holes 16, thereby designing a stable and flat flame.

According to the apparatus 10, the anode electrode layer 3 is directly exposed to the flat flame so that the power is generated. Therefore, a high electrical efficiency can be obtained. By using the flat flame, moreover, the in-plane temperature distribution of the solid oxide fuel cell C is uniform so that a thermal stress and a soot can be prevented from being generated. Therefore, it is possible to enhance the durability Of the solid oxide fuel cell C.

In the apparatus 10, furthermore, the air does not flow through the combustion burner surface 12. Therefore, the burning state of the flat flame is stabilized. In addition, the fuel injection holes 16 can be formed at a high density over the combustion burner surface 12. Moreover, the flame generated by each of the fuel injection holes 16 has a uniform size. Furthermore, the dimension of the combustion burner surface 12 can be properly designed corresponding to the dimension of the solid oxide fuel cell C. Therefore, it is possible to generate both of small and large flat flames.

The solid oxide fuel cell power generator according to the invention is not restricted to the embodiment but can be properly changed without departing from the scope of the invention.

For example, the solid oxide fuel cell power generator 10 according to the invention takes the circular shape as seen on a plane of the combustion burner surface 12. However, the shape of the combustion burner surface 12 can be properly changed corresponding to the shape of the solid oxide fuel cell C. For example, it is preferable that the combustion burner surface 12 should also be changed into a square if the solid oxide fuel cell C takes a square shape.

In the invention, moreover, a plurality of solid oxide fuel cells C may be disposed in a planar direction to expose the respective anode electrode layers 3 to the flat flame, thereby generating a power. The respective solid oxide fuel cells C may be connected in series or in parallel depending on uses.

### [Examples]

Description will further be given by using a specific example to be an example of the invention. The scope of the invention is not restricted to the specific example.

### [Specific Example]

As will be described below, the combustion burner head 17 and the solid oxide fuel cell C were created as a specific example of the solid oxide fuel cell power generator according to the invention.

First of all, the combustion burner head 17 shown in Fig. 3 was created in the following manner.

Brass was used as a material for forming the combustion burner head 17. The combustion burner surface 12 had a diameter of 13 mm, and 30 fuel injection holes 16 having a diameter of 1.2 mm were formed to have a three-time rotational symmetry with the central point of the combustion burner surface 12 set to be an axis as shown in Fig. 3.

Next, the solid oxide fuel cell C was created in the following manner.

For the solid electrolytic substrate 1, an SDC (samaria doped ceria : Sm_{0.2}Ce_{0.8}O_{1.9}) substrate having a diameter of 15 mm and a thickness of 180 µm was used. As a material for forming the anode electrode layer 3, a paste of Ni_{0.9}Co_{0.1}Oₓ having SDC and Rh₂O₃ added thereto was printed in an area of 1.3 cm² over one of the surfaces of the solid electrolytic substrate 1. As a material for forming the cathode electrode layer 2, a paste of SSC (samarium strontium cobaltite : Sm_{0.5}Sr_{0.5}CoO₃) having SDC added thereto was printed in an area of 1.3 cm² over the other surface of the solid electrolytic substrate 1. Then, the solid electrolytic substrate 1 having the pastes printed on both sides was annealed at 1200°C.

A platinum mesh formed like a mesh by welding a platinum wire was buried in each paste printed surface and burning was carried out at 1200°C for one hour in the air, and a collecting electrode was formed for taking a measure against a crack so that the solid oxide fuel cell C of the solid oxide fuel cell power generator 10 was created.

Then, a well-known mixed fuel gas supply apparatus was connected to the combustion burner head 17 through a cylindrical pipe. Cooling means was provided in the pipe. In the mixed fuel gas, n-butane was used for the fuel component and air was used as the oxidant component. An n-butane concentration in the mixed fuel gas was 4%. Moreover, the flow rate of the mixed fuel gas was regulated to be 600 sccm by the mixed fuel gas supply apparatus. sccm represents, in cc (10⁻³ litter), a flow rate per minute which is measured at 0°C in one atm (an atmospheric pressure of 1014 hPa).

By using the specific example, the flat flame F was generated over the combustion burner surface 12 of the combustion burner body 11. The anode electrode layer 3 was disposed just above the reducing flame Fa in the flat flame F. A distance between the anode electrode layer 3 and the combustion burner surface 12 in the solid oxide fuel cell C was equal to or smaller than 10 mm.

In the flat flame F, moreover, the flame on the center of the combustion burner surface 12 is the highest and the surrounding flame is lower than that of the center. The reason is as follows. It can be supposed that a flow velocity of the mixed fuel gas in the pipe is the highest in the central part and a surrounding flow velocity is lower than that in the central part. Furthermore, a convex portion is formed in the flat flame F corresponding to a position of each of the fuel injection holes 16, and the flat flame F wholly takes a concavo-convex shape in which the central part is the highest.

### [Comparative Example]

A comparative example was obtained in the same manner as the specific example except that the Bunsen burner including a fuel injection hole having a diameter of 4 mm as shown in Fig. 7A was used as a combustion burner head, an n-butane concentration in a mixed fuel gas was set to be 6.5 % and a flow rate of the mixed fuel gas was regulated to be 400 sccm by a mixed fuel gas supply apparatus.

### [Evaluation of In-plane Temperature Distribution of Solid Oxide Fuel Cell]

A temperature distribution on two surfaces of the cathode electrode layer in the power generation of the solid oxide fuel cell Cwasmeasuredbyusing the specific example and the comparative example. The temperature was measured by using a non-contact type surface thermometer (manufactured by NEC San-ei Instruments, Ltd.). The temperature distribution was measured in a portion from one of edges to the other edge in the circular cathode electrode layer 2 with respect to a straight line in a direction of a diameter passing through the central point of the cathode electrode layer 2.

As a result, an average temperature of the surface of the cathode electrode layer 2 according to the specific example was 676.8°C and a variation in a surface temperature was ±20°C with respect to the average temperature. On the other hand, the average temperature of the surface of the cathode electrode layer 2 according to the comparative example was 594.4°C and a variation in a surface temperature was ±40°C with respect to the average temperature.

Thus, it was found that the average temperature of the surface of the cathode electrode layer 2 according to the specific example is higher than that of the comparative example by approximately 80°C and a range of the variation in the surface temperature is smaller by 40°C. A total amount of the n-butane in the mixed fuel gas used in the power generation is smaller than that in the specific example. Therefore, it was found that an electrical efficiency for the fuel according to the specific example is more excellent.

Accordingly, it was found that the electrical efficiency for the fuel according to the specific example is higher than that in the comparative example and the in-plane temperature distribution of the fuel cell according to the specific example is more excellent than that in the comparative example.

### [Evaluation of Soot Generation in Surface of Anode Electrode Layer]

The generation of a soot over the surface of the anode electrode layer 3 in the power generation of the solid oxide fuel cell C was evaluated by using the specific example and the comparative example. The surface of the anode electrode layer 3 in the solid oxide fuel cell C was visually observed after the power generation for 10 hours to check the presence of the soot.

As a result, the soot was not present and the generation of the soot was not observed in the anode electrode layer 3 according to the specific example. On the other hand, a circular soot shown in Fig. 7B was observed in the anode electrode layer 3 according to the comparative example. The soot generated in the anode electrode layer 3 according to the comparative example was annealed and removed. Consequently, a concaved and damaged portion appeared on the anode electrode layer 3. This indicates that the anode electrode layer 3 was deteriorated during the generation of the soot or the combustion of the soot.

Accordingly, it was found that the soot is not generated on the surface of the anode electrode layer according to the specific example but is generated in the comparative example.

### [Evaluation of Power Generating Output Characteristic]

A power generating output characteristic of the solid oxide fuel cell power generator was evaluated by using the specific example and the comparative example. More specifically, initial characteristics of a voltage - current characteristic and a power - current characteristic were measured.

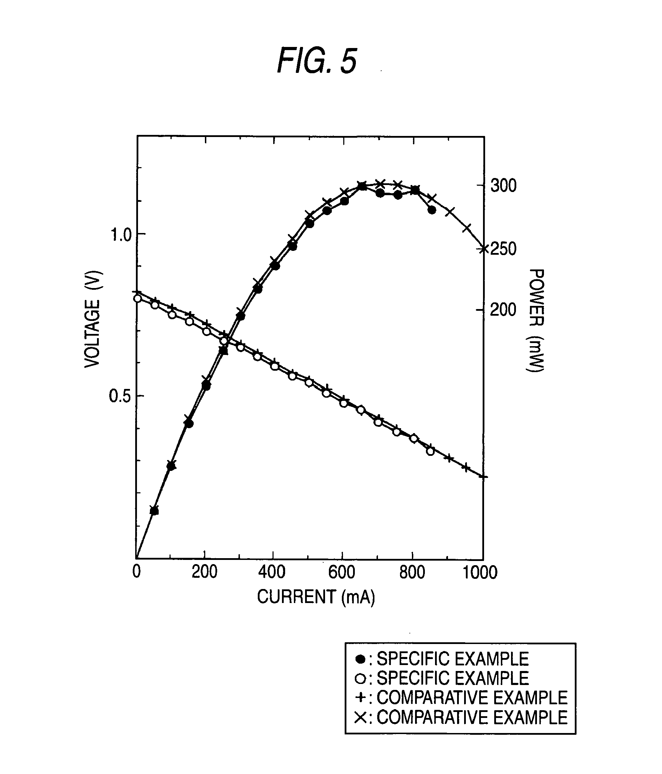

The result is shown in Fig. 5. For both the voltage - current characteristic and the power - current characteristic, equivalent results were obtained in the specific example and the comparative example. The total amount of the n-butane in the mixed fuel gas used in the power generation is smaller in the specific example. Therefore, it was found that the electrical efficiency for the fuel is more excellent in the specific example.

Accordingly, it was found that the initial characteristic of the power generating output characteristic according to the specific example is more excellent than that in the comparative example.

### [Evaluation of Durability of Power Generating Output Characteristic]

A durability of the power generating output characteristic of the solid oxide fuel cell power generator was evaluated by using the specific example and the comparative example. More specifically, a voltage - time characteristic was measured. In the measurement, a variation with time in a voltage between the lead wires L1 and L2 taken out of the cathode electrode layer 2 and the anode electrode layer 3 in the solid oxide fuel cell C was checked in a state in which a load was applied in such a manner that a current flowing between the lead wires L1 and L2 is a constant current of 400 mA/cm².

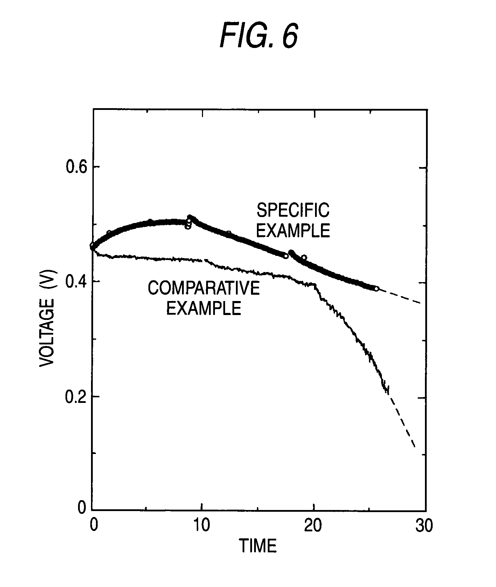

The result is shown in Fig. 6. The variation with time in the voltage according to the comparative example was decreased slowly and monotonously till approximately 20 hours after a start of the measurement and was decreased with a great gradient after the 20 hours. On the other hand, the variation with time in the voltage according to the specific example was increased slowly till approximately 10 hours after the start of the measurement and was then decreased slowly and monotonously after the 10 hours. Although values of the voltages according to the specific example and the comparative example were equal to each other immediately after the start of the measurement, the voltage according to the specific example then became higher than that according to the comparative example and the voltage according to the specific example was always higher than that according to the comparative example within the measuring time.

Accordingly, it was found that the durability of the power generating output characteristic according to the specific example is more excellent that that of the comparative example. The reason why the voltage according to the comparative example is rapidly decreased after the 20 hours is that a crack is caused by a soot and a thermal stress which are generated on the surface of the anode electrode layer 3.

The present invention havingbeen described with reference to the foregoing embodiments should not be limited to the disclosed embodiments and modifications, but may be implemented in many ways without departing from the spirit of the invention.

## Claims

1. A solid oxide fuel cell power generator comprising:
a solid oxide fuel cell having a solid electrolytic substrate on which a cathode electrode layer and an anode electrode layer are formed; and
a combustion portion for supplying a flat flame to the anode electrode layer, wherein
said flat flame is radiated uniformly over a flat surface of the anode electrode.

2. The solid oxide fuel cell power generator according to claim 1, wherein the combustion portion has a combustion burner surface disposed in almost parallel with the anode electrode layer apart therefrom by a predetermined distance, wherein
the flat flame is generated by combusting a premixed fuel supplied to the combustion burner surface, and
the combustion burner surface has a plurality of fuel injection holes formed in an opposed region to the anode electrode layer.

3. The solid oxide fuel cell power generator according to claim 2, wherein the fuel injection holes are uniformlyformed over the combustion burner surface.

4. The solid oxide fuel cell power generator according to claim 2, wherein the fuel injection holes are formed to have a rotational symmetrical property of a three-time rotational symmetry or more with a central point of the combustion burner surface set to be an axis thereof.

5. The solid oxide fuel cell power generator according to claim 2, wherein the anode electrode layer is disposed just above a reducing flame in the flat flame.

6. The solid oxide fuel cell power generator according to claim 2, wherein an equivalence ratio of a fuel component to an oxidant component in the premixed fuel is regulated to be 1.0 to 1.5.

7. The solid oxide fuel cell power generator according to claim 2, wherein each of the fuel injection holes takes a circular shape having a diameter which is equal to or greater than 0.5 mm and is smaller than 2.0 mm.

8. The solid oxide fuel cell power generator according to claim 2, wherein an opening area of all of opening portions of the fuel injection holes is equal to or larger than 15% and is smaller than 40% of an area of the region of the combustion burner surface which is opposed to the anode electrode layer.

9. The solid oxide fuel cell power generator according to any of claims 2 to 8, wherein the premixed fuel is obtained by previously mixing a gaseous fuel and oxygen or a gas containing the oxygen.
